# EUROPEAN PATENT APPLICATION

(11) **EP 2 045 729 A1**
(43) Date of publication of application: **08.04.2009**
(21) Application number: 08165653.0
(22) Date of filing: 01.10.2008
(51) Int. Cl.: G06F 17/30

(54) **Data processing system and method**

(30) Priority: 30.09.2008 US 241746; 02.10.2007 US 977033 P
(71) Applicant: BlinkX UK Ltd, Cambridge, Cambridgeshire CB4 0WX (GB)
(72) Inventor: Chandratillake, Suranga, San Francisco, CA 94109 (US); Scheybeler, Matt, Cambridge, Cambridgeshire CB4 1JN (GB); Stockdale, Jack, Cambridge, Cambridgeshire CB1 5EY (GB); Rodriguez, Abraham Sergio Martinez, San Francisco, CA 94107 (US)
(74) Representative: Hutchinson, Glenn Stanley

(57) **Abstract**

An advertisement player is described that embeds on a web page having a video player, which is hosted on a first server. The advertisement player is configured to make a call to and send information associated with a video file about to be played on the web page across a network to a contextual engine hosted on a second server. The contextual engine is configured to reference data on the video file stored in a memory of the contextual engine or send the video file to one or more content analysis tools to determine a content of the video file and then store the video file's content characteristics in a database. The contextual engine analyses the content of the video file to be played on the video player and content of two or more advertisements from two or more advertisement networks and sends back across the network to the first server hosting the advertisement player one or more advertisements to display with the video file as the video player plays the video file on the web page. The contextual engine pairs the one or more advertisements with the video file based on at least a best match of relevance of the one or more advertisements to content in the video file to be played on the web page.

## Description

This application claims priority to United States Provisional Patent Application number 60/977033, entitled VARIOUS METHODS AND APPARATUSES FOR PAIRING ADVERTISEMENTS WITH VIDEO FILES, inventor Chandratillake ET AL, filed Oct. 2, 2007; and claims priority to United States Provisional Patent Application number 12/241,746, entitled Various Methods and Apparatuses for Pairing Advertisements with Video Files, inventor Chandratillake et al, filed September 30, 2008.

### NOTICE OF COPYRIGHT

A portion of the disclosure of this patent document contains material that is subject to copyright protection. The copyright owner has no objection to the facsimile reproduction by anyone of the interconnect as it appears in the Patent and Trademark Office Patent file or records, but otherwise reserves all copyright rights whatsoever.

An aspect of the invention is to contextually understand a content in a video file and make a pairing of one or more contextually relevant image data, for example, advertisements, to the content in the video file.

### BACKGROUND

Most video players on websites posses proprietary coding to play video files coded to work with those viral video players. Also, in most systems, the video player, video file and advertisement are integrated together limiting the amount of opportunities an advertisement can be played with a video because that video player must be used to play the video and advertisement. Further, the same advertisement cannot be paired and played with other videos.

### Summary of Invention

Various embodiments are described. In an embodiment, an advertisement player is described that embeds on a web page having a video player, which is hosted on a first server. The advertisement player is configured to make a call to and send information associated with a video file about to be played on the web page across a network to a contextual engine hosted on a second server. The contextual engine is configured to reference data on the video file stored in a memory of the contextual engine or send the video file to one or more content analysis tools to determine a content of the video file and then store the video file's content characteristics in a database. The contextual engine analyses the content of the video file to be played on the video player and content of two or more advertisements from two or more advertisement networks and sends back across the network to the first server hosting the advertisement player one or more advertisements to display with the video file as the video player plays the video file on the web page. The contextual engine pairs the one or more advertisements with the video file based on at least a best match of relevance of the one or more advertisements to content in the video file to be played on the web page.

### BRIEF DESCRIPTION OF THE DRAWINGS

The multiple drawings refer to the embodiments of the invention.
Figure 1 illustrates a diagram of an embodiment of a system to pair advertisements with video files.
Figures 2, 2a and 2b illustrate a flow diagram of an embodiment of the advertisement player displaying relevant advertisement when a video file is played.
Figure 3 illustrates a diagram of an embodiment of an on-demand dynamic spider.
Figure 4 illustrates a diagram of an embodiment of an embedded ad tag.
Figure 5 illustrates a diagram of an embodiment of the contextual engine pairing ads to video files.

While the invention is subject to various modifications and alternative forms, specific embodiments thereof have been shown by way of example in the drawings and will herein be described in detail. The invention should be understood to not be limited to the particular forms disclosed, but on the contrary, the intention is to cover all modifications, equivalents, and alternatives falling within the spirit and scope of the invention.

### DETAILED DISCUSSION

In the following description, numerous specific details are set forth, such as examples of specific protocol commands, named components, connections, internet publishing and advertising technology, etc., in order to provide a thorough understanding of the present invention. It will be apparent, however, to one skilled in the art that the present invention may be practiced without these specific details. In other instances, well known components or methods have not been described in detail but rather in a block diagram in order to avoid unnecessarily obscuring the present invention. Thus, the specific details set forth are merely exemplary. The specific details may be varied from and still be contemplated to be within the spirit and scope of the present invention. The term coupled is defined as meaning connected either directly or indirectly.

An example process of and apparatus to pair advertisements with video files is described. The following drawings and text describe various example implementations of the design. The system may contain an advertisement player. An implementation of the advertisement player may be an advertisement tag widget such as a Blinkx Adtag^{™}. The system may also contain a Dynamic Spider, an adhoc contextual engine such as a Blinkx Adhoc^{™}, one or more web pages of users with an embedded on-line video player, and an embedded advertisement tag on these web pages. The system is a self-service, in-situ contextually relevant, form-agnostic image data, preferably, advertising delivery system for video from an arbitrary number of advertising networks that requires no or minimal code-level integration. The embedded ad tag widget may be embedded on an arbitrary web page, next to an arbitrary video object and have the adhoc contextual engine dynamically understand the video, find relevant advertisements from multiple sources and then deliver those ads within or around the video player itself.

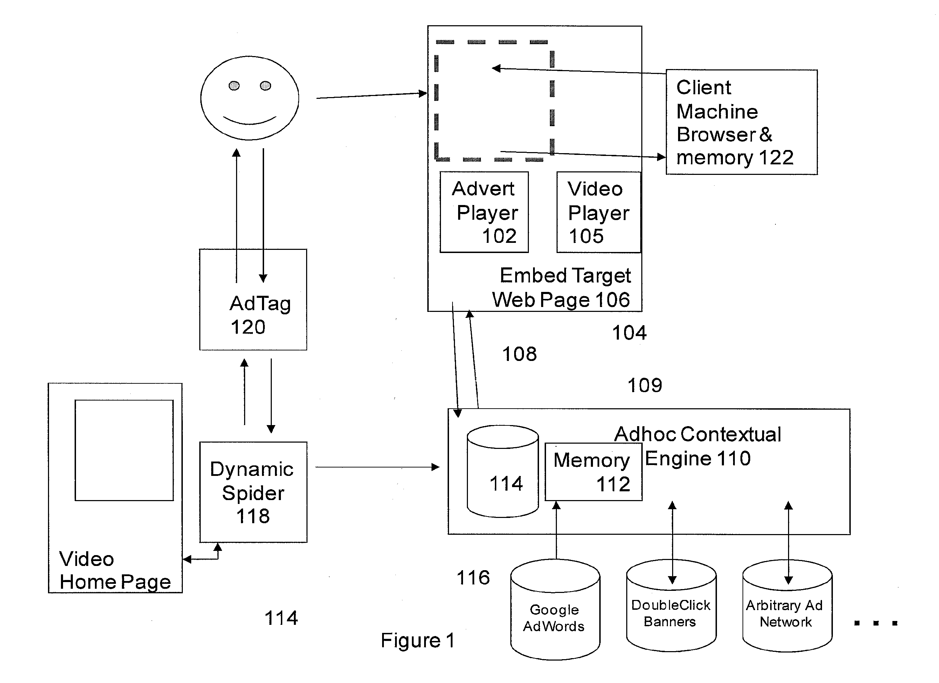

Figure 1 illustrates a diagram of an embodiment of a system to pair advertisements with video files. The advertisement player 102 such as the Advertisement embedded tag, may be configured to embed on a web page 106 having a video player 105, which is hosted on a first server 104. The first server 104 is configured to download the web page 106 over the network into a memory of a client machine 122 having a browser application resident on the client machine 122 upon request from the browser. The client machine 122 displays the web page 106 on a display of the client machine 122 to allow a user of the client machine 122 to make a request to activate the video player 105 to play the video file. The advertisement player 102 makes a call to and sends information associated with a video file about to be played on the web page 106 across a network to a contextual engine 110 hosted on a second server 109. The contextual engine 110 is configured to reference data on the video file stored in a memory 112 of the contextual engine 110 or send the video file to one or more content analysis tools to determine a content of the video file and then store the video file's content characteristics in a database 114. The content analysis tools may include a video recognition tool, a speech-to-text tool, and an optical character recognition tool that analyze the video file itself, rather than getting a keyword summary about the video file, to determine the content of the video file. The tools supply contextual characteristics about the video file to the contextual engine 110, which both makes a record of the video file in the memory 112 and its contextual characteristics as well as stores the video file's content characteristics in the database 114. The contextual engine 110 analyses the content of the video file to be played on the video player 105 and content of two or more advertisements from two or more advertisement networks 116 and sends back across the network to the first server 104 hosting the advertisement player 102 one or more advertisements to display with the video file as the video player 105 plays the video file on the web page 106. The contextual engine 110 pairs the one or more advertisements with the video file based on at least a best match of relevance of the first advertisement to content in the video file to be played on the web page 106.

The advertisement player 102 may be a web widget or a logic circuit configured to display two or more different types of advertisements including but not limited to banner advertisements and video advertisements. The advertisement player 102 has at least the following routines configured into the advertisement player 102 by an AdTag module 120 to 1) detect when the video player 105 has been requested to play a video file and to detect what video file is being requested to be played, 2) make a call across the network to the contextual engine 110 hosted on the second server 109 to relay identifying information regarding the video file about to be played on the video player 105, and 3) receive one or more advertisements from a network of advertising databases 116 in order to display the one or more advertisements when the video file is played. The advertisement is displayed on a location in the web page 106 relative to the window displaying the video file based on a selection supplied from the web page 106 administrator. The location on the web page 106 relative to the video file played by the video player 105 can be for example within the window displaying the video file, overlaid on the video file, along side the window displaying the video file, on top the window displaying the video file, below the window displaying the video file, or anywhere else the web page 106 administrator wants the advertisement shown with respect to the window playing the video file.

In an embodiment, the advertisement player 102 has code scripted in hyper text mark up language 1) to couple with a viral video player 105 program embedded into the web page 106 as a web object, and 2) to play the advertisement with the video file being played by the video player 105 independent of the code and programming language of the code used to script either the video player 105 or the video file itself. The video player 105 and the video file as well as the video file and the first advertisement are not integrated together maximizing the amount of opportunities an advertisement can be played with one or more video files.

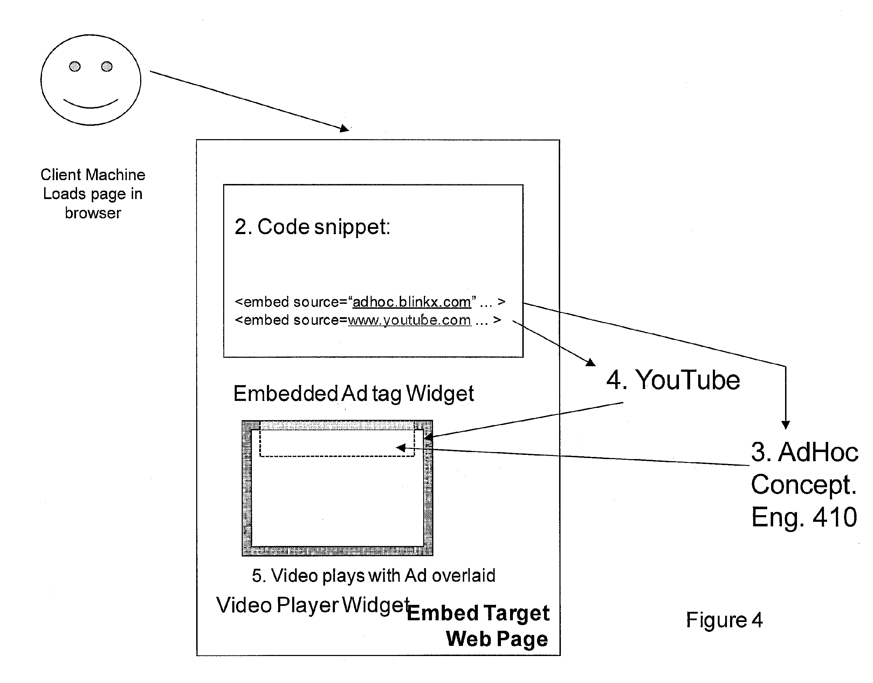

The contextual engine 110 is configured to determine one or more advisements to fetch based on 1) determining and assigning a rating how relevant in subject matter a particular advertisement is to the content in the video file and 2) how much revenue a web page 106 owner will receive for playing the particular advertisement (Advertisement yield). The contextual engine 110 has a port to receive the information sent over the network by the advertisement player 102 indicating a weight of the relevance rating in light of the revenue received factor, were the weight of the relevance rating is programmably set in a field of the advertisement player 102 by web page 106 administrator (see figure 4).

The contextual engine 110 fetches the advertisements to be displayed with the video file from any of the two or more advertisement networks 116 and requests the advertisement network storing the advertisements to send the advertisements over the network to the advertisement player 102.

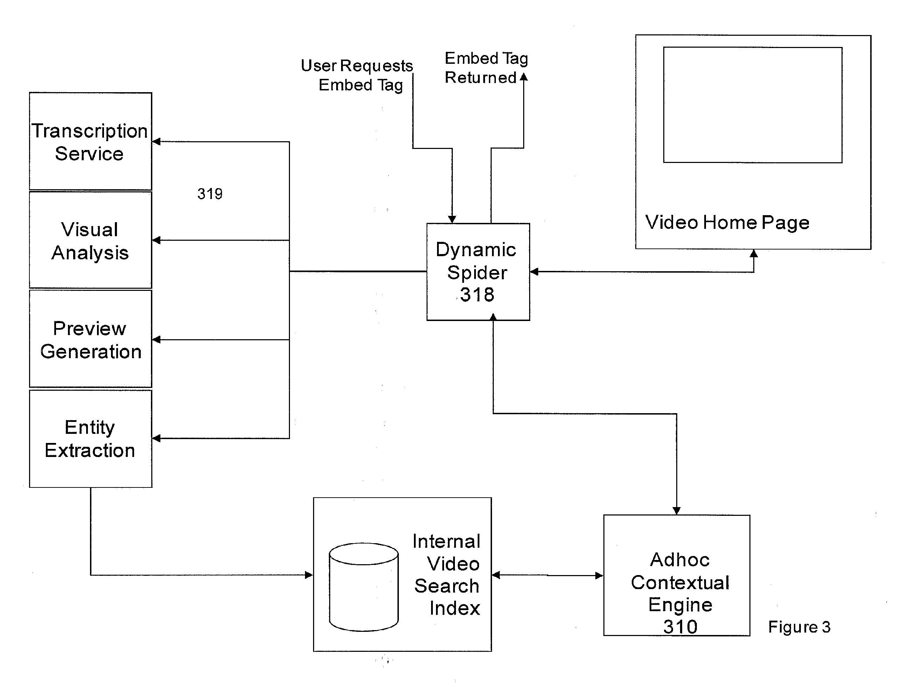

The advertisement player 102 is configured to display the one or more advertisements in close time-proximity during the playing of the video file to the timings of the extracted ideas and entities from the contextual points identified by the content analysis tools (see figure 3), allowing for several different advertisement types to be returned and displayed along with the video file. The display of the advertisements is timed to coincide with a point in time within the video file where the one or more advertisements are most relevant to the content being played at that time in the video file.

The contextual engine 110, upon receipt of the information about the video file about to be played, then references a ready index of already analyzed video files stored in the memory 112 of the contextual engine 110. When the video file is not present in the ready index, then the information about a video file about to be played is passed to an on-demand dynamic spider 118. The on-demand dynamic spider 118 is configured to browse the World Wide Web upon request by the contextual engine 110 to find and bring to the contextual engine 110 the video file identified in the request.

The on-demand dynamic spider 118 is also configured to periodically fetch and supply video files to the contextual engine 110 that the contextual engine 110 was previously unaware of, where the dynamic spider 118 looks up in the ready index to check to see if the contextual engine 110 already knows of a discovered video file and when the discovered video file is not known to the contextual engine 110, then the on demand dynamic spider 118 spider 118s on the fly to both get meta data on the web page 106 the discovered video file is based on and to send the discovered video file to the contextual engine 110 system so that the content analysis tools can contextually determine the content of the video file, and then supply contextual characteristics about the discovered video file to the contextual engine 110. The contextual engine 110 then both makes a record of the discovered video file and its contextual characteristics as well as stores the video file's content characteristics in the database 114.

The on-demand dynamic spider 118 is configured to download and parse the discovered video's home page in real time, extracting video objects and collecting associated data. The content analysis tools apply transcription services, visual analysis, preview generation, entity extraction, text recognition, and other services to extract contextual points about the content of the video file. The contextual engine 110 receives the contextual points then makes a contextual record of that discovered video file and stores the contextual record of that video file with the video's embed tag or URL as its key to this contextual record. The dynamic spider 118 or the adhoc contextual engine 110 then adds the new video file to an internal video search index.

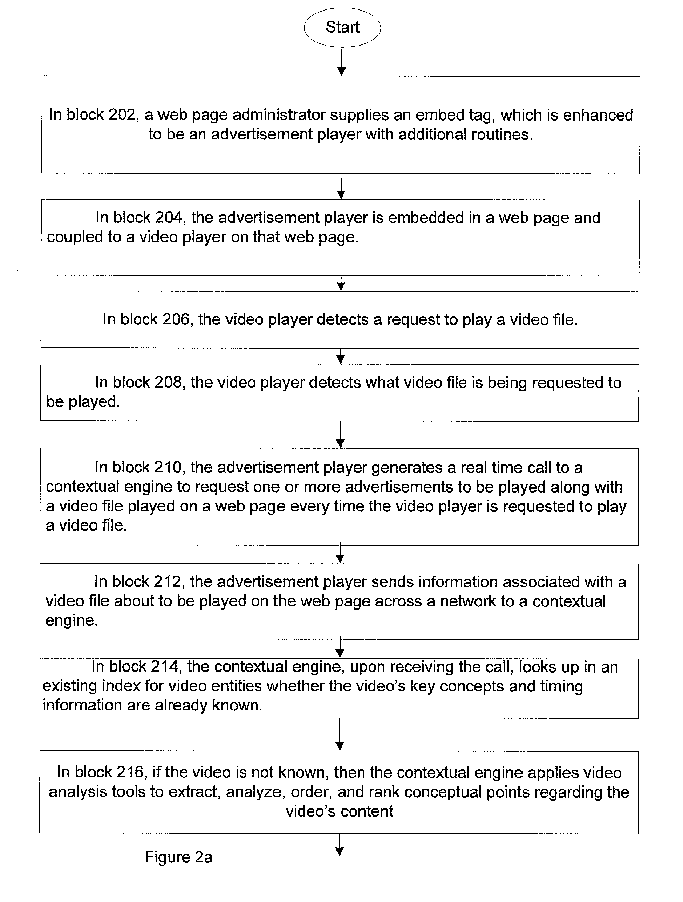

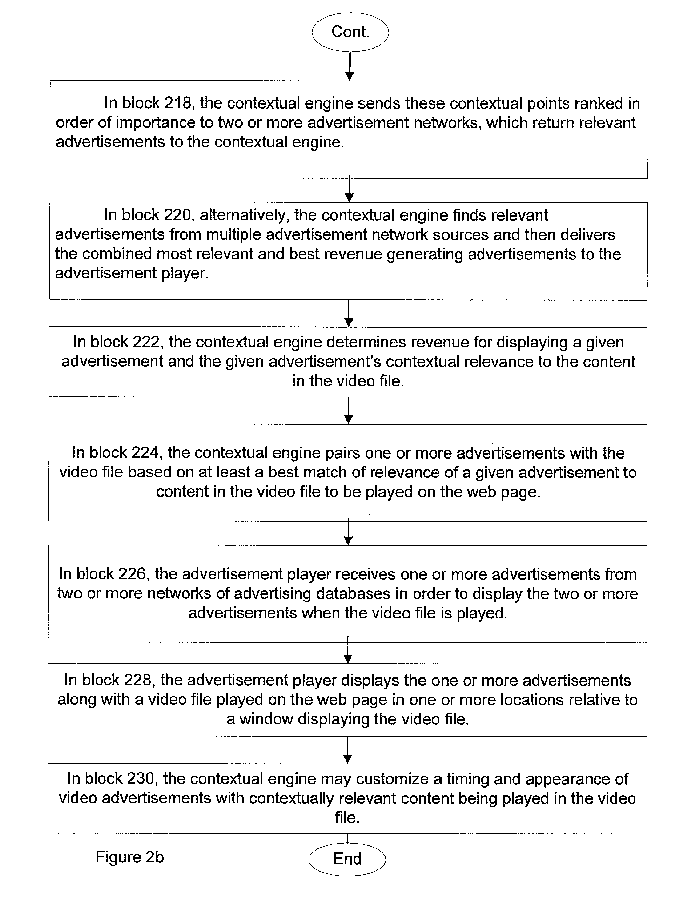

Figure 2 illustrates a flow diagram of an embodiment of the advertisement player displaying relevant advertisement when a video file is played. The below algorithms and routines may be implemented in code scripted in a software programming language, code embedded into hardware logic circuits, and a combination of both.

In block 202, a web page administrator supplies an embed tag, which is enhanced to be an advertisement player with at least the following routines configured to 1) detect when the video player has been requested to play a video file and to detect what video file is being requested to be played, 2) make a real time function call across the network to the contextual engine hosted on the second server to relay identifying information regarding the video file about to be played on the video player and to request one or more advertisements to be played along with a video file played on a web page every time the video player is requested to play a video file, and 3) receive one or more advertisements, including the first advertisement, from a network of advertising databases in order to display the one or more advertisements when the video file is played and display the one or more advertisements along with a video file played on the web in one or more locations relative to a window displaying the video file.

In block 204, the advertisement player is embedded in a web page and coupled to a video player on that web page.

In block 206, the video player detects a request to play a video file.

In block 208, the video player detects what video file is being requested to be played.

In block 210, the advertisement player generates a real time call to a contextual engine to request one or more advertisements to be played along with a video file played on a web page every time the video player is requested to play a video file.

In block 212, the advertisement player sends information associated with a video file about to be played on the web page across a network to a contextual engine.

In block 214, the contextual engine, upon receiving the call, looks up in an existing index for video entities whether the video's key concepts and timing information are already known.

In block 216, if the video is not known, then the contextual engine applies video analysis tools to extract key ideas, entity data, and timing information from analysis of the video file itself and meta data associated with the video file. The video analysis tools use transcription and visual analysis services to extract contextual points about the video file itself from the video's audio and visual tracks. The contextual points may include both entities identified in the content and ideas including people, places, sports, companies, major events, and buildings. These contextual points are ordered based on their importance and the frequency these contextual points appear in the content of the video file. The meta data for the video file include its description, title, inserted tags in the video file

In block 218, the contextual engine sends these contextual points ranked in order of importance to two or more advertisement networks, which return relevant advertisements to the contextual engine.

In block 220, alternatively, the contextual engine finds relevant advertisements from multiple advertisement network sources and then delivers the combined most relevant and best revenue generating advertisements to the advertisement player.

In block 222, the contextual engine determines revenue for displaying a given advertisement and the given advertisement's contextual relevance to the content in the video file.

In block 224, the contextual engine matches the video file, via a contextual record of that video file, to advertisements that the contextual engine is aware at that time to find one or more most relevant and profitable advertisements grading out from that matching. The contextual engine may determine the contextual nature of the content in the video file as well as the contextual nature of the content of the potential advertisements from multiple advertisement sources and then contextually matches up the two. Thus, the contextual engine pairs one or more advertisements with the video file based on at least a best match of relevance of a given advertisement to content in the video file to be played on the web page.

In block 226, the advertisement player receives one or more advertisements from two or more networks of advertising databases in order to display the two or more advertisements when the video file is played.

In block 228, the advertisement player displays the one or more advertisements along with a video file played on the web page in one or more locations relative to a window displaying the video file. The advertisements are displayed on a location in the web page relative to the video file based on a setting supplied from the web page administrator. The advertisement player displays advertisement types including text advertisements, banners, audio advertisements, image advertisements, pre-, post and mid-roll video advertisements, and other similar types of advertisements.

In block 230, the contextual engine may customize a timing and appearance of video advertisements with contextually relevant content being played in the video file. The contextual engine sends the customization information along with the advertisements to the advertisement player. Thus, the advertisement player can display the one or more advertisements in close time-proximity during the playing of the video file to the timings of the extracted ideas and entities from the contextual points identified by the content analysis tools. This allows for both several different advertisements to be returned and displayed along with the video file being played as well as the display of the advertisements to be timed to coincide with the point in time within the video file when those extracted ideas and entities appear.

Figure 3 illustrates a diagram of an embodiment of an on-demand dynamic spider. Referring to figure 3, initially, a user (i.e. web page publisher) provides the system to pair advertisements with video files with the embed tag or URL of the video file he or she wants advertising for. The user/publisher of the website can have found this video from any source and simply provides the system the embed tag or URL to the video that is to be paired. The system verifies if the video represented by this tag or URL is already known to the system by comparing the tag or URL to all those already known by the system and present in the system's index. If it is not known, in an embodiment, the dynamic spider 318 component is invoked once in real time at this point, as the user sets up system to pair advertisements with video files on their video.

When the video is not present in the index, the embed tag request is passed to the on-demand dynamic spider 318. The on-demand dynamic spider 318 Web spider 318 is a program that browses the World Wide Web in a methodical, automated manner to provide an update on videos already analyzed by the adhoc contextual engine 310 or find source video files for the adhoc contextual engine 310 to analyze. The Web spider 318 can be also used to gather specific types of information from Web pages, such as advertising information, demographic information, information on the topic or nature of a given Web page's content and other information on the video files. Thus, the on-demand dynamic spider 318 upon request by the adhoc contextual engine 310 goes out, finds, and brings to the adhoc contextual engine 310 a video file that the adhoc contextual engine 310 was previously unaware of. The on demand spider 318 may be dormant otherwise.

After the tag is passed to the dynamic spider 318, the dynamic spider 318 looks up in a database or otherwise checks to see if the adhoc contextual engine 310 already knows of this video or otherwise sees if this video is listed in an index of videos being maintained by the adhoc contextual engine 310. The dynamic spider 318 can also determine what the video is contextually about based on unique ID code contained in the embed tag. If the video is known to the adhoc contextual engine 310, nothing further is done here. If the video is not known to the adhoc contextual engine 310, the on demand dynamic spider 318 spiders on the fly to automatically get the web page the video is based on and sends the video file to the adhoc contextual engine 310 system so that the video can be contextually processed. The dynamic spider 318 downloads and parses the video's home page in real time, extracting Video objects and collecting associated data. The adhoc contextual engine system has content analysis tools 319, which then apply transcription services, visual analysis, preview generation, entity extraction, as well as other video analysis techniques to extract the important contextual points about the content of the video file. The adhoc contextual engine system then makes a contextual record of that video and stores the contextual record of that video file with the video's embed tag or URL as its key to this contextual record. The dynamic spider 318 or the adhoc contextual engine 310 then adds the new video file to an internal video search index. The analyzed video file can also indexed to a public video search engine 310.

After the video analysis, the dynamic spider 318 returns to the advertisement tag widget. The advertisement tag widget generates a special embed code that embodies this video and the user's id (for accounting purposes). The embedded ad tag is returned to the user. Note, if a matching video file was found to already exist in the internal video search index, then system generates an embed tag and returns the embed tag to the user, for inclusion in their web page.

In an embodiment, a web widget is a portable chunk of code that can be installed and executed within any separate HTML-based web page by an end user without requiring additional compilation. The web widget may be a script, module, snippet, plug-in or extension form that adds some advertisement content to that page that is not static and the content may be changed by someone other than the owner of the web page and will be run when the page is called.

Figure 4 illustrates a diagram of an embodiment of an embedded ad tag.

Referring to figures 4, the user, such as a web page publisher, now embeds the video (using the original tag provided with the additional enhancements) and also the provided embed ad tag in a page of his choice. The embedded ad tag 402 (a.k.a. Embedded Ad Player) is a widget piece of code (written in JavaScript and Flash, but many programming languages could be used) that can be placed onto a webpage near a similar piece of embedded code for a video player (such as those provided by You Tube, Google Video and other popular user-generated and professional content video sites). The code is executed on loading of the page and, at that time, sends a request to the adhoc contextual engine 410. This adhoc contextual engine 410 will return with a suggestion of one or more advertisements to display that are related to this video and the embedded ad tag 402 will display this ad. This ad can be of any form including, but not limited to, clickable text ads, display banner ads and inline video ads (whether pre, post or interstitial roll). The ads may come from databases of stored advertisements as well as external, third party advertisement networks.

A viewer of the web page loads the target web page in their browser. The viewer (consumer) opens the web page and selects to watch this video. The code in page is executed, included embedded code for player (in example, You Tube) and the code for the embedded ad tag 402.

The advertisement embed tag automatically contacts the adhoc contextual engine 410 to request relevant advertisements to this video file.

The adhoc contextual engine 410 matches the video, via the contextual record of that video, to advertisements that the adhoc contextual engine 410 is aware of right now, as well as other data the adhoc contextual engine 410 is aware of, such as a user profile, what website or key word lead the user to that video, etc., and finds most relevant and profitable advertisement grading out from that matching. The adhoc contextual engine 410 determines the contextual nature of the content of the video as well as the contextual nature of the content of the potential advertisements from multiple advertisements sources and then contextually matches up the two. The contextual nature of the system ensures a high degree of relevance between the advertising and the content being viewed, maximizing user involvement and interactivity. The adhoc contextual engine 410 also knows the pricing associated with the determined most contextually relevant advertisements. The adhoc contextual engine 410 returns one or more of the most relevant and profitable advertisements at that time to the advertisement embed tag in the video.

The web page also may send a request for the video stream. The video stream is returned to the web page and played in the web page's video player. Thus, the viewer of that website plays the video with the video player. When the viewer hits play, the video file is activated from the source site hosting the video file and played on the website. The website owner has added the ad tag widget 402code 402 along with the code to retrieve the video file. The ad tag widget 402may be associated with video files stored locally on that website as well. The advertisement does not have to be embedded with the video file or video player, merely the embedded advertisement tag widget is coupled with the video file and then calls for one or more of the most relevant and profitable advertisements at that time to be pair with the video file about to be played. Thus, the advertisements whether text, banner ads or video ads are all available as potential ads to be paired with a particular video file at any given time and be played along side or with any entities' particular video player.

The embed ad tag widget 402 plays the relevant advertisements at the same time as the video file but is not embedded into the video file. Rather, the embedded ad tag widget 402 may play the one or more advertisements: within the window displaying the video file; overlaid on the video file; along side the window displaying the video file; on top the window displaying the video file; below the window displaying the video file; or anywhere else the user who supplied the video file wants the advertisement shown with respect to the window playing the video file.

On-line video is commonplace and growing. Much of the on-line video is under-monetized or not monetized at all. In addition, much of the content is not attached to singular web pages and is, instead, available in 'embeddable' form where the online video can be plugged into any given web page (and thus delivered through a 'widget'). This system is as equally distribute-able in form as the advertising and can be used to monetize this video content in the many places, such as web sites, where the videos are found. The self-service, nature of the system and the fact that the embedded advertisement tag widget added onto the video file requires no code integration with the video file or video player and only minimal code integration (of a copy-and-paste nature) with the target web page itself, makes the embedded advertisement tag widget ideal for consumer-driven distribution, thus making it more likely to spread than heavier-weight, professional advertising solutions that typically require code-level integration with the video player itself.

Also, the in-situ operation occurs without interrupting the normal state of a system. The in-situ nature of the system, in which the advertisement tag is embedded with a video file and then calls to the website hosting the adhoc contextual engine 410 to send one or more advertisements to play in or along side the video file, allows for distribution of pairing advertisements to video files 1) to web sites beyond the website hosting the adhoc contextual engine 410 and 2) also to any type of video content players rather than just one. In some other systems, the video player, video file and advertisement are integrated together limiting the amount of opportunities an advertisement can be played with a video because that video player must be used to play the video and advertisement. However, the design of this system lets the same advertisement be paired and played with many different videos, on many different types of viral video formats and on many different video players. Thus, the form-agnostic nature of the system maximizes the types of advertisements this system can deliver, thus increasing the options in finding relevant advertising inventory for a given piece of video content. Plus, the multiple-network approach allows the system to automatically draw advertising from more than one adverting source.

In an embodiment, consumers can assemble web pages by finding content that is offered in widget form and embed those widgets in their own web pages. This user-driven act of collation, editing and publishing may propel a user-generated content phenomenon. Video is a popular form of content that is distributed in this way, which is played on embeddable, viral video players (such as that provided by Youtube.com and others). Each viral video player is a free video sharing and video search engine 410 service that allows anyone to upload video clips to a web server as well as make their own media available free of charge. Note, some videos are also offered for sale through a Video Store. Viewers can search and play these uploaded videos directly from the Video website, as well as download video files and remotely embed them on their web pages. However, many of the viral video players are associated with a particular entity leading to many versions of viral video players being in use today. The system to pair advertisements with video files allows a way to generate revenue directly from these embedded video assets. The system to pair advertisements with video files allows any (unskilled and untrained) consumer to obtain the short embed ad tag widget 402from the advertisement tag widget that will allow them to attached relevant (and thus highly successful) advertising to these videos and generate revenue from views of the content contained within them.

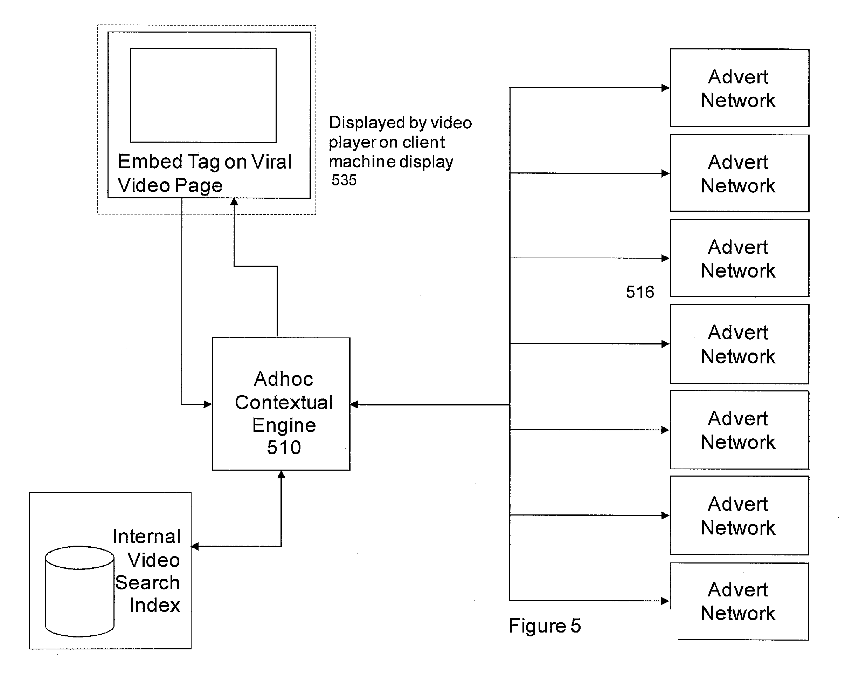

Figure 5 illustrates a diagram of an embodiment of the adhoc contextual engine pairing ads to video files. In an embodiment, the adhoc contextual engine 510 integrates with a range of advertisement networks 516 to deliver contextually relevant advertisements to be placed within arbitrary third party videos on the web. The adhoc contextual engine 510 uses the existing internal video search index and the dynamic spider when necessary to maintain full contextual knowledge of all videos with which it interfaces.

For each video a user wishes the adhoc contextual engine 510 to deliver advertisements for, a distinct html embed tag is generated at registration time. The embed tag is inserted into the users web page.

Every time the web page containing embed tag is viewed by an Internet user, the included embed tag generates a real time call to the adhoc contextual engine 510 to request advertisements be placed over the video. The embed ad tag widget calls the adhoc contextual engine 510 with unique video id.

On receiving the call, the adhoc contextual engine 510 lookups in existing index for video entities, key concepts and timing information. Adhoc then extracts the key ideas and any entity from the video, this includes key ideas and entities found in the human-generated meta data for the video (description, title, tags) plus those automatically extracted from the video's audio and visual tracks using transcription and visual analysis services. Entities and key ideas (included people, places, sports, companies, major events, buildings, objects) are ordered based on their importance and the frequency they appear, and sent in turn to the chosen advert networks, which return relevant advertisements to the adhoc contextual engine 510. The advert networks 516 are chosen based on their suitability to deliver relevant advertisements for the item in question, and any explicit user or adhoc configuration. The types of advert supported include text advertisements, banners, audio advertisements, image advertisements and pre-, post and mid-roll video advertisements. Configurable Adhoc processing logic determines entities, pricing, contextual relevance, and ad network usage.

The advertisements returned by the various advert networks 516 are aggregated and ordered by the adhoc contextual engine 510, and the data is returned in real time to the calling embed tag object on the web page for advert display. If and when supported by the specific 3rd party web video playing being used, advertisements are displayed in close time-proximity to the timings of the extracted ideas and entities, allowing for several different advert areas to be returned and displayed within a video, and the display of the advertisements timed to coincide with the point within the video those entities first appear. If not supported, the ads are played at configurable or random points in time above or near the video player.

The client machine of the user having a browser application resident on the client machine downloads the web page over the network, such as the Internet, into a memory of the client machine. The client machine displays the web page on a display (535) of the client machine to allow a user of the client machine to make a request to activate the video player to play the video file.

Thus, in this embodiment, the adhoc contextual engine 510, supplies a contextually relevant video advertising platform. Just as Google's AdSense^{™} transformed advertising on the Text Web, the adhoc contextual engine 510 will revolutionize video advertising by matching compelling, customized, TV-style ads to user's audience on the Video Web.

The search technology performs two useful functions - finding content, and also matching that content to meaningful, relevant advertising. The adhoc contextual engine 510 leverages speech-to-text transcription and visual analysis technology to understand video content more thoroughly and effectively than any other service today, and can therefore dynamically place the most pertinent advertising against that video.

On-line video presents an extremely attractive opportunity for advertisers and media companies: targeted distribution with the potential for immediate action, and the availability of real-time metrics to assess the effectiveness of a given campaign.

The system to pair advertisements with video files offers content partners and advertisers a value proposition -- video advertising which combines the emotive power of TV promotion, with the relevance and utility of contextual search advertising. This is an exciting prospect, not only in terms of enhancing viewer experience, but also in increasing the effectiveness of campaigns.

The system to pair advertisements with video files also offers media companies and advertisers the most flexible solution for customizing the timing and appearance of video ads, with options that include pre-, post- and mid-roll placement, as well as dynamically-selected banners, in-video mini-banners and a post-roll catalog view. Partners can even select which ad databases to leverage - their own, the adhoc platform databases, or even external ad systems, such as Google's AdWords^{™}.

The system to pair advertisements with video files addresses the rich amount of media and advertising sources, resulting in higher monetization for media companies, more effective marketing for advertisers and, most importantly, a useful, non-disruptive experience for users. As video choice continue to explode, consumers desperately need tools that help them easily find what they are interested in. At the same time, marketers clamor to reach interested, though ever-fragmenting audiences with judicious and relevant ad messaging. The system to pair advertisements with video files contextual video approach deftly bridges those two forces, allowing information and advertising to flourish in a mutually beneficial way.

The system to pair advertisements with video files technologies listen to - and even see - the Web, helping users enjoy a breadth and accuracy of search results not readily available elsewhere. The system to pair advertisements with video files offers media companies and video sites a way to place targeted ads alongside (or even in) Web videos based on the specific words spoken in the videos, as well as their overall context.

The system to pair advertisements with video files addresses web video advertising, which is one of the fastest-growing segments online, with a way to make those ads as relevant as search ads.

The system to pair advertisements with video files allows web video producers as well as web page publishers to send videos to the system to be indexed so that when somebody watches that video a targeted ad can be triggered. The system to pair advertisements with video files matches ads with the videos on any given publisher's Web page through a form of contextual mapping to video. An advertiser can buy keywords, and the ads will be triggered when those words are spoken in a video or they appear in a title, description or a tag attached to the video. The ads can be delivered right back on the publisher's site selected from their own inventory, that of an ad network, or from the adhoc platform.

The ads themselves can take many forms-pre-roll, mid-roll, or post-roll video ads, as well as video "bugs" that crawl across the screen, and clickable text ads and banners that appear around the video.

Also an advertiser index may be tied to a video. The advertiser list is a clickable list that appears after the video of every product or service mentioned in the video, as determined by adhoc contextual engine's algorithm. The advertiser list is sort of a product placement-plus. Advertisers would not even have to strike deals beforehand with whoever made the videos. They could just find all mentions of their products and advertise against them.

In one embodiment, the software used to facilitate the pair advertisements with video files described above can be embodied onto a machine-readable medium. A machine-readable medium includes any mechanism that provides (e.g., stores and/or transmits) information in a form readable by a machine (e.g., a computer). For example, a machine-readable medium includes read only memory (ROM); random access memory (RAM); magnetic disk storage media; optical storage media; flash memory devices; DVD's, electrical, optical, acoustical or other form of propagated signals (e.g., carrier waves, infrared signals, digital signals, EPROMs, EEPROMs, FLASH, magnetic or optical cards, or any type of media suitable for storing electronic instructions. The information representing the apparatuses and/or methods stored on the machine-readable medium may be used in the process of creating the apparatuses and/or methods described herein. For example, the information representing the apparatuses and/or methods may be contained in an Instance, soft instructions in an IP generator, or similar machine-readable medium storing this information.

Some portions of the detailed descriptions above are presented in terms of algorithms and symbolic representations of operations on data bits within a computer memory. These algorithmic descriptions and representations are the means used by those skilled in the data processing arts to most effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the above discussions, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system's registers and memories into other data similarly represented as physical quantities within the computer system memories or registers, or other such information storage, transmission or display devices.

While some specific embodiments of the invention have been shown the invention is not to be limited to these embodiments. For example, most functions performed by electronic hardware components may be duplicated by software emulation. Thus, a software program written to accomplish those same functions may emulate the functionality of the hardware components. The hardware logic consists of electronic circuits that follow the rules of Boolean Logic, software that contain patterns of instructions, or any combination of both. The invention is to be understood as not limited by the specific embodiments described herein, but only by scope of the appended claims.

Although the above embodiments make reference to "advertisements", embodiments are not limited thereto. Embodiment can be realised in which the "advertisements" can be a form of visual data representing, for example, at least one of still image data and moving image data.

## Claims

1. An apparatus, **characterised by**:
an advertisement player (102) that is configured to embed on a web page having a video player (105), which is hosted on a first server (104), the advertisement player (102) is configured to make a call to and send information associated with a video file about to be played on the web page (106) across a network (108) to a contextual engine (110) hosted on a second server (109), the contextual engine (110) is configured to reference data on the video file stored in a memory (112) of the contextual engine (110) or send the video file to one or more content analysis tools (319) to determine a content of the video file and then store the video file's content characteristics in a database (114), the contextual engine (110) analyses the content of the video file to be played on the video player (105) and content of two or more advertisements from two or more advertisement networks (116) and sends back across the network (108) to the first server (104) hosting the advertisement player (102) a first advertisement to display with the video file as the video player (105) plays the video file on the web page (106), wherein the contextual engine (110) pairs the first advertisement with the video file based on at least a best match of relevance of the first advertisement to content in the video file to be played on the web page (106).

2. The apparatus of claim 1, wherein the first server is configured to download the web page over the network into a memory of a client machine having a browser application resident on the client machine upon request from the browser and the client machine displays the web page on a display of the client machine to allow a user of the client machine to make a request to activate the video player to play the video file.

3. The apparatus of either of claims 1 and 2, wherein the content analysis tools include a video recognition tool, a speech-to-text tool, and an optical character recognition tool that analyze the video file itself to determine the content of the video file, and then supply contextual characteristics about the video file to the contextual engine, which both makes a record of the video file and its contextual characteristics in the memory as well as stores the video file's content characteristics in the database.

4. The apparatus of any of claims 1 to 3, wherein the advertisement player has at least the following routines configured to 1) detect when the video player has been requested to play a video file and to detect what video file is being requested to be played, 2) make a call across the network to the contextual engine hosted on the second server to relay identifying information regarding the video file about to be played on the video player, and 3) receive one or more advertisements, including the first advertisement, from a network of advertising databases in order to display the one or more advertisements when the video file is played, where the advertisement is displayed on a location in the web page relative to the video file based on a selection supplied from the web page administrator.

5. The apparatus of any of claims 1 to 4, wherein the advertisement player is configured to display two or more different types of advertisements comprising banner advertisements and video advertisements, and the contextual engine fetches the first advertisement to be displayed with the video file from a first of two or more advertisement networks and requests the advertisement network storing the first advertisement to send the first advertisement over the network to the advertisement player.

6. The apparatus of any of claims 1 to 5, wherein the advertisement player is configured to display the one or more advertisements in close time-proximity during the playing of the video file to the timings of the extracted ideas and entities from the contextual points identified by the content analysis tools, allowing for several different advertisement types to be returned and displayed along with the video file, and the display of the advertisements timed to coincide with a point in time within the video file where the first advertisement is most relevant to the content being played at that time in the video file.

7. The apparatus of any preceding claim, wherein the contextual engine is configured to determine one or more advisements to fetch based on 1) determining and assigning a rating how relevant in subject matter a particular advertisement is to the content in the video file and 2) how much revenue a web page owner will receive for playing the particular advertisement, and the contextual engine has a port to receive the information sent over the network by the advertisement player indicating a weight of the relevance rating in light of the revenue received factor, were the weight of the relevance rating is programmably set in a field of the advertisement player by web page administrator.

8. The apparatus of any preceding claim, further comprising:
an on-demand dynamic spider, wherein the contextual engine upon receipt of the information about the video file about to be played, then references a ready index of already analyzed video files stored in the memory of the contextual engine and when the video file is not present in the ready index, then the information about a video file about to be played is passed to an on-demand dynamic spider, where the on-demand dynamic spider is configured to browse the World Wide Web upon request by the contextual engine to find and bring to the contextual engine the video file identified in the request.

9. The apparatus of claim 8, wherein the on-demand dynamic spider is also configured to periodically fetch and supply video files to the contextual engine that the contextual engine was previously unaware of, where the dynamic spider looks up in the ready index to check to see if the contextual engine already knows of a discovered video file and when the discovered video file is not known to the contextual engine, then the on-demand dynamic spider spiders on the fly to both get meta data on the web page the discovered video file is based on and to send the discovered video file to the contextual engine system so that the content analysis tools can contextually determine the content of the video file, and then supply contextual characteristics about the discovered video file to the contextual engine, which both makes a record of the discovered video file and its contextual characteristics as well as stores the video file's content characteristics in the database.

10. The apparatus of claim 9, wherein the on-demand dynamic spider is configured to download and parse the discovered video's home page in real time, extracting video objects and collecting associated data, and the content analysis tools apply transcription services, visual analysis, preview generation, entity extraction, text recognition to extract contextual points about the content of the video file, where the contextual engine receives the contextual points then makes a contextual record of that discovered video file and stores the contextual record of that video file with the video's embed tag or URL as its key to this contextual record.

11. The apparatus of any preceding claim, wherein the advertisement player displays the one or more advertisements, including at least one video advertisement, at a location relative to the video file played by the video player selected from within a window displaying the video file, overlaid on the video file, along side the window displaying the video file, on top the window displaying the video file, and below the window displaying the video file.

12. The apparatus of any preceding claim, wherein the advertisement player is configured 1) to couple with a viral video player program embedded into the web page as a web object, 2) to play the advertisement with the video file being played by the video player independent of the code and programming language of the code used to script either the video player or the video file itself, and the video player and the video file as well as the video file and the first advertisement are not integrated together.

13. A method, **characterised by**:
embedding an advertisement player (102) in a web page (106) and coupling to a video player (105) on that web page (106);
detecting when the video player (105) has been requested to play a video file;
detecting what video file is being requested to be played;
sending a request across a network (108) to a contextual engine (110) to request one or more advertisements to be played along with a video file played on a web page (106) every time the video player (105) is requested to play a video file;
sending information associated with a video file about to be played on the web page (106) across a network (108) to a contextual engine (110);
upon receiving the call, the contextual engine (110) looks up in an existing index for video entities whether the video's key concepts and timing information are already known;
if the video is not known, applying video analysis tools (319) to extract key ideas, entity data, and timing information from analysis of the video file itself and meta data associated with the video file, wherein the video analysis tools (319) use transcription and visual analysis services to extract contextual points about the video file itself from the video's audio and visual tracks;
determining revenue for displaying a given advertisement and the given advertisement's contextual relevance to the content in the video file;
matching by the contextual engine (110) the video file, via a contextual record of that video file, to advertisements that the contextual engine (110) is aware at that time to find one or more most relevant and profitable advertisements grading out from that matching, wherein the contextual engine (110) pairs one or more advertisements with the video file based on at least a best match of relevance of a given advertisement to content in the video file to be played on the web page (106);
receiving the one or more advertisements;
sending the video file and advertisements to be displayed on a display of a client machine (122); and
displaying the one or more advertisements along with a video file played on the web page (106) in one or more locations relative to a window displaying the video file.

14. The method of claim 13, further comprising:
ordering these contextual points based on their importance and the frequency these contextual points appear in the content of the video file;
sending these contextual points ranked in order of importance to two or more advertisement networks, which return relevant advertisements to the contextual engine; and
displaying advertisements types including text advertisements, banners, audio advertisements, image advertisements, and pre-, post and mid-roll video advertisements, wherein the contextual points include both entities identified in the content and ideas including people, places, sports, companies, major events, and buildings.

15. The method of either of claims 13 and 14, further comprising:
receiving two or more advertisements from two or more networks of advertising databases in order to display the two or more advertisements when the video file is played, where the advertisements are displayed on a location in the web page relative to the video file based on a setting supplied from the web page administrator; and
customizing a timing and appearance of video advertisements with contextually relevant content being played in the video file, wherein the meta data for the video file include its description, title, inserted tags in the video file.

16. The method of any of claims 13 to 15, further comprising:
displaying the one or more advertisements in close time-proximity during the playing of the video file to the timings of the extracted ideas and entities from the contextual points identified by the content analysis tools, allowing for several different advertisements to be returned and displayed along with the video file being played , and the display of the advertisements timed to coincide with a point in time within the video when those extracted ideas and entities appear.

17. The method of any of claims 13 to 16, wherein the contextual engine determines the contextual nature of the content in the video file as well as the contextual nature of the content of the potential advertisements from multiple advertisement sources and then contextually matches up the two, and
finding relevant advertisements from multiple sources and then delivering a combined most relevant and best revenue generating advertisements to the advertisement player.

18. A system, **characterised by**:
an advertisement player (102) that is configured to embed on a web page (106) having a video player (105), which is hosted on a first server (104), the advertisement player (102) is configured to make a call to and send information associated with a video file about to be played on the web page (106) across a network (108) to a contextual engine (110) hosted on a second server (109), the contextual engine (110) is configured to reference data on the video file stored in a memory (112) of the contextual engine (110) or send the video file to one or more content analysis tools (319) to determine a content of the video file and then store the video file's content characteristics in a database (114), the contextual engine (110) analyses the content of the video file to be played on the video player (105) and content of two or more advertisements from two or more advertisement networks (116) and sends back across the network (108) to the first server (104) hosting the advertisement player (102) a first advertisement to display with the video file as the video player (105) plays the video file on the web page (106), wherein the contextual engine (110) pairs the first advertisement with the video file based on at least a best match of relevance of the first advertisement to content in the video file to be played on the web page (106);
a client machine (122) having a browser application resident on the client machine (122) configured to download the web page (106) over the network (108) into a memory of the client machine (122) from the first server (104) upon request from the browser and the client machine 122 displays the web page (106) on a display (535) of the client machine (122) to allow a user of the client machine (122) to make a request to activate the video player (105) to play the video file; and
an on-demand dynamic spider (118), wherein the contextual engine (110) upon receipt of the information about a video file about to be played, then references a ready index of already analyzed video files stored in the memory (112) of the contextual engine (110) and when the file video is not present in the ready index, then the information about a video file about to be played is passed to the on-demand dynamic spider (118), where the on-demand dynamic spider (118) is configured to browse the World Wide Web upon request by the contextual engine (110) to find and bring to the contextual engine (110) the video file identified in the request.

19. The system of claim 18, wherein the contextual engine is configured to determine one or more advisements to fetch based on 1) determining and assigning a rating how relevant in subject matter a particular advertisement is to the content in the video file and 2) how much revenue a web page owner will receive for playing the particular advertisement, and the contextual engine has a port to receive the information sent over the network by the advertisement player indicating a weight of the relevance rating in light of the revenue received factor, were the weight of the relevance rating is programmably set in a field of the advertisement player by web page administrator.

20. The system of either of claims 18 and 19, wherein the advertisement player is configured to display the one or more advertisements in close time-proximity during the playing of the video file to the timings of the extracted ideas and entities from the contextual points identified by the content analysis tools, allowing for several different advert areas to be returned and displayed along with the video file, and the display of the advertisements timed to coincide with the point within the video where the advertisement is most relevant to the content being played at that time in the video file, and
wherein the advertisement player has at least the following routines configured to 1) detect when the video player has been requested to play a video file and to detect what video file is being requested to be played, 2) make a call across the network to the contextual engine hosted on the second server to relay identifying information regarding the video file about to be played on the video player, and 3) receive one or more advertisements, including the first advertisement, from a network of advertising databases in order to display the one or more advertisements when the video file is played, where the advertisement is displayed on a location in the web page relative to the video file based on a selection supplied from the web page administrator.
